# EUROPEAN PATENT SPECIFICATION

(11) **EP 0 478 112 B1**
(45) Date of publication and mention of the grant of the patent: **01.03.1995**
(21) Application number: 91305274.2
(22) Date of filing: 11.06.1991
(51) Int. Cl.: F24H 1/34, B01D 1/00, F22B 3/04

(54) **Vacuum boiler type evaporator**
Vakuumkocherartiger Verdampfer
Evaporateur du type bouilloire à vide

(30) Priority: 28.09.1990 JP 261008/90; 30.11.1990 JP 338569/90
(43) Date of publication of application: 01.04.1992
(73) Proprietor: TOKYO GAS CO., LTD., Minato-ku Tokyo 105 (JP); SUMITOMO PRECISION PRODUCTS COMPANY LIMITED, Amagasaki-shi, Hyogo Prefecture 660 (JP)
(72) Inventor: Miyata, Yoshiaki, Yokohama-shi, Kanagawa Prefecture (JP); Seta, Akio, Misato-shi, Saitama Prefecture, Tokyo (JP); Tsui, Nobuhiko, Suginami-ku, Tokyo (JP); Kujirai, Hiroshi, Yokohama-shi, Kanagawa Prefecture (JP); Satoh, Youji, Osaka Prefecture (JP); Shotani, Hitonobu, Amagasaki-shi, Hyogo Prefecture (JP); Sahara, Kazuya, Sanda-shi, Hyogo Prefecture (JP); Ikeda, Yoshimichi, Osaka Prefecture (JP)
(74) Representative: Livsey, Gilbert Charlesworth Norris

(56) References cited:
- DE-A- 3 731 356
- PATENT ABSTRACTS OF JAPAN, unexamined applications, M field, vol. 1, no. 2, March 4, 1977 THE PATENT OFFICE JAPANESE GOVERNMENT page 215 M 76
- PATENT ABSTRACTS OF JAPAN, unexamined applications, M field, vol. 8, no. 50, March 7, 1984 THE PATENT OFFICE JAPANESE GOVERNMENT page 144 M 281
- DERWENT ACCESSION No. 77-13 928 Questel Telesystems (WPIL) Derwent Publications Ltd., London & JP-A-77 003 406 (TOKYO GAS)
- PATENT ABSTRACTS OF JAPAN, unexamined applications, field C, vol. 5, no. 62 April 25, 1982 THE PATENT OFFICE JAPANESE GOVERNMENT page 155 C 52

## Description

The present invention relates to a reduced pressure or vacuum boiler type evaporator and in particular, to an evaporator including a vacuum boiler vessel and a condenser vessel arranged in a separate fashion, with means for collecting noncondensable gases so as not to deteriorate the heat exchange effect. Such an evaporator has particular utility in converting natural gas from a liquid form to a gaseous form.

Liquefied natural gas (LNG) evaporators include an open rack type evaporator wherein sea water as a heating medium is brought into contact with an array of vertical heat transfer tubes so as to increase the temperature at which LNG changes from its liquid phase to its gaseous phase. Another type of evaporator for LNG is described in Patent Abstract of JAPAN Vol 5, no. 62 (C-52)(734), JP-56-15801.

Another type of evaporator uses a burner as a heating source. A heat exchanger is immersed in a water vessel. The burner provides a high temperature combustion heat source below the heat exchanger. Water is used as an intermediate heating medium to increase the temperature of the LNG. LNG is then vaporized to natural gas (NG).

However, such type of evaporator often suffers from a malfunctioning burner, or the burner fails to ignite the fuel as it is placed in the water vessel. The heat exchanger is designed to accommodate vigorously circulating water. However, this results in complications and leads to an increase in production costs. A further problem is that a large blower and motor are required to produce and maintain the stirring water.

A vacuum boiler also uses heat by means of a burner (see Japanese patent publication JP-51114505, Japanese laid-open patent publication No 245003/87 and Japanese patent publication JP-58205039).

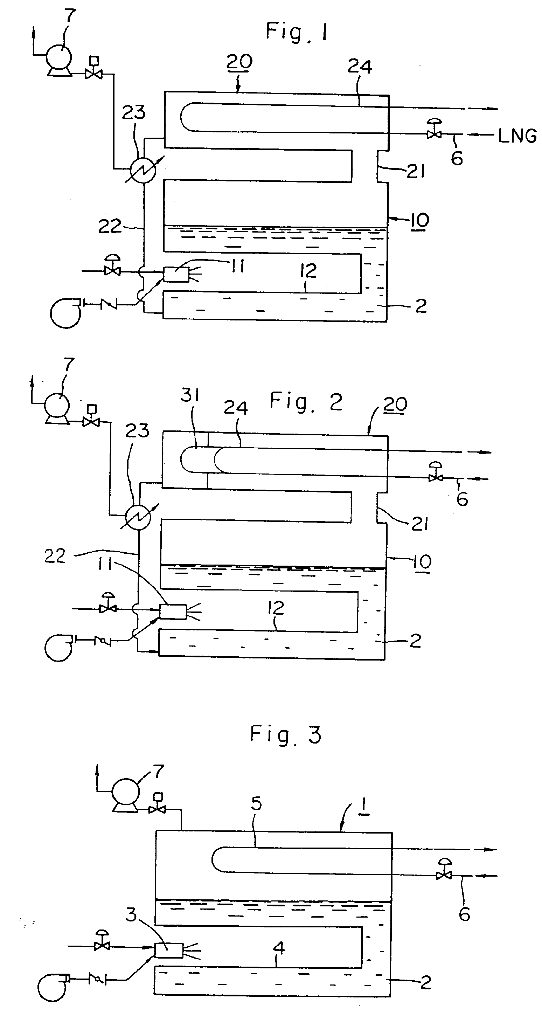

A typical vacuum boiler is illustrated in Figure 3 and includes a vacuum vessel 1 within which water 2 as a heating medium is contained, a burner pipe 4 extending from the lower portion of the vacuum vessel 1 and adapted to transmit heat from a burner 3 to the water 2, and a heat transfer tube 5 extending into the upper portion of the vacuum vessel 1. The water 2, is boiled under vacuum and vaporized. Heat transfer of condensed steam is used to increase the temperature of the fluid flowing through the heat exchange pipe 5. The vacuum boiler can be applied in various ways such as a hot water feed boiler or a heater.

When such a vacuum boiler is used with a low temperature fluid or LNG noncondensable gas, there results a substantial decrease in the capability of the boiler.

Referring specifically to Figure 3, the heat transfer tube 5 is coupled to a LNG feed pipe 6, and the vacuum boiler functions as an LNG evaporator. Noncondensable gases may result in a decrease in the effectiveness of heat transfer between the steam and the LNG. Particularly, when a considerable amount of gas has condensed to the surface of the heat transfer tube 5, ice is produced on its surface, deteriorating heat transfer between the steam and the LNG. LNG can not completely be vaporized, and a mixture of gases and low temperature liquid are disadvantageously delivered from the evaporator.

To this end, a vacuum pump 7 is required to remove noncondensable gas from the vacuum boiler type evaporator.

Accordingly, it is an object of the present invention to provide a vacuum boiler type evaporator which cooperates with a vacuum pump to effectively remove noncondensable gas and prevent attachment of noncondensable gas to the surface of a heat exchange pipe which may, otherwise, deteriorate the capability of the evaporator.

Accordingly this invention provides a vacuum boiler type evaporator comprising a sealed vacuum boiler vessel having a lower portion in which water is contained, and an upper portion in which a steam chamber is defined, characterized in that, separate from the boiler, there is a sealed vacuum condenser vessel including a set of heat transfer tubes through which liquified natural gas flows, heating means for heating said vacuum boiler vessel, a conduit for feeding steam from said boiler vessel to said condenser vessel, a condensate return pipe for delivering condensate from said condenser vessel to said vacuum boiler vessel, and collector means for removing noncondensable gas from said evaporator, and wherein said collector means is in the form of a heat exchanger placed in the condensate return pipe system and adapted to collect the noncondensable gas.

Also, in order to achieve the objective, according to a preferred aspect of the invention, the collector means of the first embodiment includes a noncondensable gas collector provided in said condenser vessel and adapted to collect the noncondensable gas. The noncondensable gas collector includes a plurality of heat exchange pipes projecting from the rest of the heat transfer tubes.

Preferably also, in order to achieve the objective, the heating means includes a burner.

In the vacuum boiler type low temperature or LNG evaporator of the present invention, the vacuum boiler vessel and the condenser vessel are separate from one another and interconnected by a conduit section. Further, the condensate return pipe extends between the condenser vessel and the lower portion of the boiler vessel, and another heat exchanger is provided in the condensate return pipe to collect noncondensable gas. Alternatively, some of the heat exchange pipes may project from the rest of the pipes. Steam is fed from the steam conduit to the heat exchange pipes, and the extended, U-shaped heat exchange pipes function to collect noncondensable gas contained in the steam.

By this arrangement, noncondensable gas is no longer settled on the heat transfer tubes. Heat exchange can thus be effected as it should be, and heat can be transferred without loss.

Gas settled in the additional heat exchanger of the noncondensable gas collector may be cyclically discharged from the evaporator. During each cycle, the majority of the heat exchange pipes can effect heat exchange so as to maintain the heat transfer coefficient and provide stable heat exchange.

For a better understanding of the present invention, reference may by made to the following description of preferred embodiments when taken in conjunction with the accompanying drawings, in which:-

Figure 1 is a schematic view of a vacuum boiler type evaporator according to a first embodiment of the present invention.

Figure 2 is a schematic view of a vacuum boiler type evaporator according to a second embodiment of the present invention; and

Figure 3 is a schematic view of a conventional vacuum boiler.

The present invention will now be further described by way of example with reference to Figs 1 and 2. Figs 1 and 2 show the structure of first and second embodiment of the invention, respectively. In Figs 1 and 2, like reference numerals designate like parts, and a set of thermally conductive tubes or pipes is simply referred to as a tube or pipe section.

A first embodiment of the invention will be described with reference to Fig 1.

As shown in Fig 1, a reduced pressure or vacuum boiler type evaporator includes a vacuum boiler vessel 10 and a condenser vessel 20 connected to the boiler vessel 10. Water 2 is contained in the vacuum boiler vessel 10 and serves as a heating medium. In order to reduce the pressure of the boiler vessel down to a predetermined level below ambient pressure, air is removed from the vacuum boiler vessel 10 while heat is applied thereto. The vacuum boiler vessel 10 is sealed when its pressure is reduced below ambient pressure. A vacuum pump 7 may be connected to the condensate return pipe 22.

A burner pipe section 12 extends from the lower portion of the vacuum boiler vessel 10 so as to transmit heat from a burner section 11 to the water contained in the lower portion of the vacuum boiler vessel 10. The burner pipe section 12 is of a conventional construction and may, for example, be of the type in which combustion gas is returned. The section 12 may comprise an array of multiple water tubes, which may be serpentine, disposed in a flow path of combustion gases.

A fuel system includes a fuel control valve opened and closed by means of a thermometer which is provided in the upper portion or steam chamber of the boiler vessel. An air control valve is also provided to control the flow of air. The fuel control valve and the air control valve cooperate to adjust the operative condition of the burner section 11. There may be a plurality of burners in the section 11.

The condenser vessel 20 is separated from the vacuum boiler vessel 10 and connected to the upper portion or steam chamber of the vacuum boiler vessel 10 by a steam conduit section 21 which may be an array of steam tubes. The lower portion of the condenser vessel 20 is connected to the lower portion of the vacuum boiler vessel 10 by a condensate return pipe system 22. Thus, the pressure of the condenser vessel 20 as well as the vacuum boiler vessel 10 is maintained at a level below the ambient pressure. The condenser vessel 20 also includes a heat transfer tube section 24 through which the LNG to be heated flows.

The pipe section 24 is composed of a multiplicity of serpentine or U-shaped pipes of identical size which are arranged in parallel. The heat transfer tube section 24 is coupled to a LNG feed pipe 6 through a control valve. LNG in the tube section 24 is heated by steam introduced into the condenser vessel 20 through conduit section 21 and then evaporated to natural gas (NG).

The condensate return pipe system 22 has a noncondensable gas collector in the form of a heat exchanger 23 to effect heat exchange between steam and a cooling medium.

With this arrangement, heat is transmitted from the burner section 11 to the burner pipe section 12 so as to boil water at a pressure below ambient pressure. The water is then vaporized, and the steam thus made is introduced through the steam conduit section 21 to the condenser vessel 20. While the steam is being condensed, the resultant heat is transmitted to the heat transfer tube section 24 so as to increase the temperature of the LNG in liquid phase. As a result of heat exchange, the steam becomes condensate. The condensate or water is then returned to the vacuum boiler vessel 10 through the condensate return pipe system 22.

The noncondensable gas collector or the heat exchanger 23 is included in the condensate return pipe 22 to collect the noncondensable gas. Thus, the noncondensable gas in the steam is prevented from being settled on the heat exchange pipe section 24 in the course of heat exchange.

According to the first embodiment of the invention, the vacuum boiler vessel 10 and the condenser vessel 20 are separated from one another and connected to each other by the steam conduit section 21. The condensate return pipe 22 extends between the vacuum boiler vessel 10 and the condenser vessel 20 and is provided with the noncondensable gas collector or heat exchanger 23. Noncondensable gas can be collected in the noncondensable gas collector 23 to prevent settlement of noncondensable gas on the heat transfer tube section 24. Heat exchange can thus be effected as it should be to ensure heat transfer between the steam and the LNG in the pipes.

Noncondensable gas may be cyclically discharged from the heat exchanger 23 while heat exchange takes place at the heat transfer tubes. This results in a stable and effective heat exchange.

A second embodiment of the invention which is very largely similar to the embodiment of Figure 1, will now be described with reference to Fig. 2.

As shown in Fig. 2, a vacuum boiler type evaporator generally includes a vacuum vessel 10 and a condenser vessel 20 connected to the vacuum boiler vessel 10. Water 2 is contained in the vacuum boiler vessel 10 and serves as a heating medium. In order to reduce the pressure of the boiler vessel down to a predetermined level below ambient pressure, air is removed from the boiler vessel 10 while heat is applied thereto. The boiler vessel 10 is sealed when its pressure is reduced below ambient pressure. Alternatively, a vacuum pump 7 may be connected to the boiler vessel 10.

A burner pipe section 12 extends from the lower portion of the boiler vessel 10 so as to transmit heat from a burner section 11 to the water contained in the lower portion of the boiler vessel 10. The burner pipe section 12 is of a conventional construction and may be of the type in which exhaust gas is returned.

A fuel system includes a fuel control valve opened and closed by means of a thermometer which is provided in the upper portion or steam chamber of the boiler vessel. This adjusts the condition of combustion in the burner section 11.

The condenser vessel 20 is separated from the vacuum boiler vessel 10 and connected to the upper portion or steam chamber of the boiler vessel 10 by a steam conduit section 21. The lower portion of a noncondensable gas collector 23 is connected to the lower portion of the vacuum boiler vessel 10 by a condensate return pipe 22. Thus, the pressure of the noncondensable gas collector 23 is maintained at a level below ambient pressure as in the vacuum boiler vessel 10. The condenser vessel 20 also includes a heat transfer pipe section 24 through which the LNG to be heated flows.

The section 24 is composed of a multiplicity of U-shaped tubes of identical size which are arranged in parallel. The heat transfer pipe section 24 is coupled to a LNG feed pipe 6 through a control valve. The LNG in the tubes of section 24 is heated by steam introduced into the condenser vessel 20 and then evaporated to natural gas (NG).

The heat transfer pipes 24 are in the form of U-shaped pipes of identical size and arranged in parallel. But in the example of Figure 2, some of the tubes 24 are longer than, or project from the other pipes to provide noncondensable gas collector tubes 31.

The noncondensable gas collector tubes 31 may be arranged, for example, at constant intervals.

The noncondensable gas collector 23 is connected to a discrete chamber defined in the condenser vessel 20 so as to receive the noncondensable gas collector tubes 31.

With this arrangement, heat is transmitted form the burner section 11 to the burner section pipe 12 so as to boil water at a pressure below ambient pressure. The water is then vaporized, and the steam thus made is introduced through the steam conduit 21 to the condenser vessel 20. The heat transfer of steam condensation is transmitted to the heat transfer pipes section 24 so as to increase the temperature of the LNG in the liquid phase. As a result of heat exchange, the steam becomes condensate. The condensate or water is then returned to the boiler vessel 10 through the noncondensable gas collector 23 and the condensate return pipe section 22.

While steam is fed through the steam conduit 21 so as to contact the heat transfer tube section 24, noncondensable gas contained in the steam can be collected by the noncondensable gas collector tubes 31 which project from the rest of the heat exchange tubes 24. This inhibits settlement of such noncondensable gas on the heat transfer tubes section 24.

According to the second embodiment of the invention, the vacuum boiler vessel 10 and the condenser vessel 20 are separated from one another and connected to each other by the steam conduit section 21. Further, a part 31 of the heat transfer tubes section 24 in the condenser vessel 20 projects from the rest of the heat transfer tubes. By this arrangement, when steam is fed through the steam conduit, noncondensable gas in the steam is collected in the extended U-shaped tube section 31. The rest of the heat transfer tubes 24 are free of noncondensable gas. Heat exchange can thus be effected as it should be to ensure heat transfer between the steam and the LNG.

The noncondensable gas may be cyclically discharged from the heat exchanger while heat exchange takes place at the heat transfer tubes. This results in stable and effective heat exchange.

The advantages of the present invention are as follows: In the present invention thus far described, the vacuum boiler vessel and the condenser vessel are separate from one another. The steam conduit section 21 is provided to feed steam from the boiler vessel 10 to the condenser vessel 20. Also, the condensate return pipe 22 is provided to deliver condensate from the condenser vessel 20 to the vacuum boiler vessel 10. Additionally, there is provided means (23,31) for removing noncondensable gas from the condenser vessel. This results in a substantial decrease in the amount of noncondensable gas which may otherwise be settled on the pipes of the condenser vessel. The heat transfer tubes are thus free of ice and enable effective heat exchange. The temperature of gas at the outlet of the pipes becomes constant.

## Claims

1. A vacuum boiler type evaporator comprising a sealed vacuum boiler vessel (10) having a lower portion (12) in which water is contained, an upper portion in which a steam chamber is defined, and separate from the boiler (10), there is a sealed vacuum condenser vessel (20) including a set of heat transfer tubes (24) through which liquified natural gas flows, heating means (11,12) for heating said vacuum boiler vessel (10), a conduit (21) for feeding steam from said boiler vessel (10) to said condenser vessel (20), a condensate return pipe (22) for delivering condensate from said condenser vessel (20) to said vacuum boiler vessel (10), and collector means for removing noncondensable gas from said evaporator, and wherein said collector means is in the form of a heat exchanger (23) placed in the condensate return pipe system (22) and adapted to collect the noncondensable gas.

2. A vacuum boiler type evaporator according to claim 1, wherein said collector means includes a noncondensable gas collector provided in said condenser vessel and adapted to collect the noncondensable gas, said noncondensable gas collector including a plurality of heat transfer tubes (31) projecting from the rest of the heat transfer tubes section (24).

3. A vacuum boiler type evaporator according to claim 1, wherein said heating means includes a burner section (11), and including means (7) for removing noncondensable gas from the heat exchanger (23).

## Patentansprüche

1. Vakuumkocherartiger Verdampfer mit einem abgedichteten Vakuum-Kochbehälter (10), der einen unteren Abschnitt (12) aufweist, in dem Wasser enthalten ist, sowie einen oberen Abschnitt, durch den eine Dampfkammer abgegrenzt ist, und mit einem vom Kochbehälter abgetrennten, abgedichteten Vakuum-Kondensorbehälter (20), in dem eine Anzahl Wärmeübertragungsrohre (24) angeordnet sind, durch welche verflüssigtes Erdgas strömt, sowie mit einem Heizungsmittel (11, 12) zur Beheizung des Vakuum-Kochbehälters (10), einer Leitung (21) zur Zuführung von Dampf von dem Kochbehälter (10) zum Kondensorbehälter (20), einer Kondensatrückführungsleitung (22) zur Rückführung von Kondensat von dem Kondensorbehälter (20) zum Kochbehälter (10) und einem Sammelmittel zur Abführung von nicht kondensierbarem Gas aus dem besagten Verdampfer, bei dem das Sammelmittel die Form eines Wärmetauschers (23) besitzt, der im Kondensatrückführungsleitungssystem (22) angeordnet und an das Auffangen von nicht kondensierbarem Gas angepaßt ist.

2. Vakuumkocherartiger Verdampfer nach Anspruch 1, bei dem das Sammelmittel einen Auffänger für nicht kondensierbares Gas aufweist, der in dem Kondensorbehälter angeordnet und an das Auffangen von nicht kondensierbarem Gas angepaßt ist, wobei der Auffänger für nicht kondensierbares Gas eine Mehrzahl von Wärmeübertragungsrohren (31) aufweist, die aus dem Abschnitt (24) der restlichen Wärmeübertragungsrohre (24) herausragen.

3. Vakuumkocherartiger Verdampfer nach Anspruch 1, bei dem das Heizungsmittel einen Brennerabschnitt (11) aufweist und der Mittel zur Abführung von nicht kondensierbarem Gas aus dem Wärmetauscher (23) besitzt.

## Revendications

1. Évaporateur de type bouilleur à vide comprenant un récipient bouilleur à vide étanche (10) ayant une partie inférieure (12), qui contient de l'eau, et une partie supérieure, dans laquelle est définie une chambre à vapeur, où se trouve, distinct du bouilleur (10), un récipient condenseur à vide étanche (20), qui comprend un ensemble de tubes de transfert de chaleur (24) dans lesquels s'écoule du gaz naturel liquéfié, des moyens de chauffage (11 et 12) destinés à chauffer le récipient bouilleur à vide (10), un conduit (21) pour alimenter en vapeur provenant du récipient bouilleur (10) le récipient condenseur (20), un tuyau de retour de condensat (22) pour envoyer du condensat du récipient condenseur (20) au récipient bouilleur à vide (10) et des moyens collecteurs pour évacuer les gaz non condensables de l'évaporateur, les moyens collecteurs étant sous la forme d'un échangeur de chaleur (23) placé dans le système de tuyaux de retour de condensat (22) et conçu pour récupérer les gaz non condensables.

2. Évaporateur de type bouilleur à vide selon la revendication 1, dans lequel les moyens collecteurs comprennent un collecteur de gaz non condensables, qui se trouve dans le récipient condenseur et qui est conçu pour recueillir les gaz non condensables, ce collecteur de gaz non condensables comprenant une pluralité de tubes de transfert de chaleur (31) qui font saillie par rapport au reste des sections de tubes de transfert de chaleur (24).

3. Évaporateur de type bouilleur à vide selon la revendication 1, dans lequel les moyens de chauffage comprennent une section de brûleur (11), et qui comprend des moyens (7) destinés à évacuer les gaz non condensables de l'échangeur de chaleur (23).
